# EUROPÄISCHE PATENTSCHRIFT

(11) **EP 2 261 122 B1**
(45) Veröffentlichungstag und Bekanntmachung des Hinweises auf die Patenterteilung: **09.11.2011**
(21) Anmeldenummer: 09011756.5
(22) Anmeldetag: 15.09.2009
(51) Int. Cl.: B64F 1/20, G08G 5/00

(54) **Verfahren und Vorrichtung zur optischen Gleitpfadanzeige als Landehilfe für ein Luftfahrzeug**
Method and device for optical display of a glide path as landing aid for an airplane
Procédé et dispositif d'affichage de radioalignement de descente optique comme aide à l'atterrissage d'un avion

(43) Veröffentlichungstag der Anmeldung: 15.12.2010
(73) Patentinhaber: LINKSrechts Ingenieurgesellschaft mbh, 21079 Hamburg (DE)
(72) Erfinder: Stelljes, Peter, 21077 Hamburg (DE); Hoven, Uwe, 21077 Hamburg (DE)
(74) Vertreter: von dem Borne, Andreas

(56) Entgegenhaltungen:
- FR-A1- 2 671 164
- US-A- 3 279 406
- US-A- 3 866 032
- US-A- 4 259 658
- US-A- 5 278 104

## Beschreibung

Die Erfindung betrifft ein Verfahren sowie eine Vorrichtung zur optischen Gleitpfadanzeige als Landehilfe für ein Luftfahrzeug, insbesondere zur Verwendung bzw. Installation auf einem Schiff.

Derartige Landehilfen werden auch als GPI-Systeme (glide path indicator) oder GSI-Systeme (glide slope indicator) bezeichnet. Sie erzeugen einen optischen Strahl bzw. ein Strahlenbündel, welcher unter einem vorgegebenen (mittleren) Winkel von z. B. 4° bezogen auf die Horizontale abgestrahlt wird und an welchem sich der Pilot eines Luftfahrzeuges, z. B. Helikopters zur Einhaltung des Gleitpfades bzw. Gleitwinkels im Anflug auf eine Landeplattform, z. B. eines Schiffes, orientieren kann. Der Gleitwinkel wird dabei optisch vorzugsweise durch eine geeignete Kodierung des Strahls angezeigt, z. B. eine Farbkodierung. Dazu erzeugt das GSI-System vorzugsweise in einem "zentralen Winkelbereich" ein Strahlenbündel mit einer bestimmten Farbe, z. B. ein grünes Strahlenbündel und oberhalb und unterhalb dieses grünen Strahlenbündels, welches den optimalen Gleitwinkel anzeigt, jeweils ein Strahlenbündel anderer Farbe, z. B. ein rotes Strahlenbündel unterhalb des grünen Strahlenbündels und ein gelbes Strahlenbündel oberhalb des grünen Strahlenbündels. Fliegt der Pilot zu tief und folglich unterhalb des optimalen Gleitpfades, so fliegt er "in" dem roten Strahlenbündel und sieht folglich rotes Licht. Fliegt er oberhalb des korrekten Gleitpfades, so wird ihm dieses durch gelbes Licht signalisiert. Es besteht optional oder ergänzend die Möglichkeit, den Gleitwinkelbereich auch durch die Wiederholfrequenz eines gepulsten Lichtstrahls anzuzeigen. In der Praxis ist es ferner üblich, die farbkodierten Lichtstrahlen oder zumindest eines der farbkodierten Strahlenbündel zusätzlich gepulst zu kodieren. So kann insbesondere der rote Lichtstrahl, welcher einen zu tiefen Anflug signalisiert, im unteren Bereich zusätzlich gepulst ausgebildet werden, um dem Piloten zu signalisieren, wenn er im roten Bereich weiter absinkt.

Damit ein solches GPI-System auf Schiffen und insbesondere kleineren Schiffen mit Helikopter-Landeplätzen einwandfrei funktioniert, ist es in der Praxis erforderlich, das System zu stabilisieren, und insbesondere Stampf- und Rollbewegungen des Schiffes bei der Erzeugung der Gleitwinkelanzeige zu kompensieren.

So kennt man aus der US 6 239 735, die als der nächtsliegende Stand der Technik angesehen wird, B1 eine Vorrichtung zur optischen Gleitpfadanzeige, bei welcher eine Lichtquelle mit Hilfe einer Linsenanordnung und einem mehrfarbigen Filter ein Strahlenbündel in den Bereich des landenden Luftfahrzeuges projiziert, wobei die von einem Referenzsensor ermittelten Stampf- und Rollbewegungen des Schiffes durch mechanische Bewegungen, nämlich Schwenk- bzw. Drehbewegungen der optischen Elemente kompensiert werden.

Ein aus der EP 0 973 140 B1 bekanntes GPI-System will auf den Einsatz mechanisch beweglicher Komponenten zur Kompensation von Stampf- und Rollbewegungen vollständig verzichten und schlägt dazu vor, die Stabilisierung ausschließlich auf elektrooptischem Wege zu realisieren, indem eine elektrooptische Bilderzeugungsvonichtung, z. B. ein LCD-Display oder eine DMD-Vor richtung (digital mirror device) in der Brennebene der Projektionslinse angeordnet wird. Auf dem LCD- oder DMD-Display wird dann ein geeignetes Farbmuster erzeugt, welches mittels der Linse in den Anflugbereich projiziert wird. Stampf- und Rollbewegungen, die von einem Referenzsensor ermittelt werden; werden dabei nicht mechanisch, sondern ausschließlich auf elektronischem Wege durch geeignete Bilderzeugung bzw. Bildverschiebung in der Brennebene der Linse kompensiert.

Aus der EP 1 547 922 B1 kennt man ein GPI-System bei welcher ein Bild mit Hilfe von Leuchtdioden und einem Bündel aus Lichtleitfasern erzeugt wird, wobei dieses Bild wiederum mit Hilfe eines optischen Linsensystems in den Anflugbereich projiziert wird.

Im Übrigen wurde auch bereits der Einsatz von Lasern bei optischen Landehilfen vorgeschlagen (vgl. US 5 287 104). Die einzelnen Gleitwinkelbereiche werden bei diesem System ebenfalls durch unterschiedliche Farben angezeigt, wobei für jeden Gleitwinkel-Teilbereich ein separater Laser mit einer bestimmten Farbe vorgesehen ist. Der zunächst kollimierte Laserstrahl wird dabei mit Hilfe eines optischen Systems aufgeweitet, so dass z. B. drei Laser jeweils ein separates Strahlenbündel mit vorgegebenen Öffnungswinkeln erzeugen. Eine Stabilisierung ist bei diesem System, welches insbesondere für einen Flugzeugträger ausgelegt ist, nicht vorgesehen.

Schließlich ist aus der DE 198 23 055 A1 bzw. der DE 199 30 096 A1 eine Vorrichtung zur bodengestützten Gleitpfadmarkierung anfliegender Flugzeuge durch Laserstrahlen bekannt, die mit Hilfe eines rotierenden Polygonspiegels eine sichtbare, leuchtende Fläche ausleuchtet, die aufgrund der in der Atmosphäre vorhandenen Kondensationskeme bei Dämmerung und Sichtrückgang durch meteorologische Bedingungen im Fluge erkannt werden. Die für den Piloten sichtbare leuchtende Fläche wird in einem, dem jeweiligen Landeplatz entsprechenden Winkel In die Atmosphäre abgestrahlt und soll das genaue Einhalten des Gleitpfades zur Piste erlauben. Zur Erzeugung des sichtbaren Lichtschirms wird der Laserstrahl mit Hilfe des Polygonspiegels in einer Ebene abgelenkt.

In der Praxis besteht das Bedürfnis, die bekannten GPI-Systeme weiter zu optimieren. Der Erfindung liegt daher die Aufgabe zugrunde, ein Verfahren sowie eine Vorrichtung zur optischen Gleitpfadanzeige als Landehilfe für ein Luftfahr zeug zu schaffen, welches sich bei kostengünstigem Aufbau durch eine einwandfreie und zuverlässige Funktionsweise auszeichnet

Zur Lösung dieser Aufgabe lehrt die Erfindung ein Verfahren und eine Vorrichtung mit den Merkmalen des Anspruchs 1 bzw. Anspruchs 4.

Die Erfindung geht dabei von der Erkenntnis aus, dass sich mit einem kollimierten Lichtstrahl eine optische Gleitpfadanzeige realisieren lässt, wenn ein solcher Lichtstrahl z. B. "zeilenweise" oder auch nach einem anderen "Muster" abgelenkt wird, so dass mit Hilfe des Lichtstrahls und dem Ablenkelement die Gleitpfadanzeige gleichsam "in den Anflugbereich" geschrieben wird, ohne dass ein zunächst erzeugtes Bild mit Hilfe aufwändiger optischer Elemente projiziert werden muss. Kollimierter Lichtstrahl meint im Rahmen der Erfindung einen räumlich stark begrenzten, nicht aufgeweiteten und folglich nicht bzw. lediglich gering divergierenden Lichtstrahl, wie z. B. einen Laserstrahl.

Im Rahmen der Erfindung besteht dabei grundsätzlich die Möglichkeit, den Gleitpfad lediglich "einfarbig" zu signalisieren, indem lediglich ein Lichtstrahl einer Farbe in den Abstrahlbereich abgelenkt wird. Besonders bevorzugt weist der Abstrahlbereich jedoch in an sich bekannter Weise zumindest zwei unterschiedliche Gleitpfadbereiche, z. B. Gleitwinkelbereiche, besonders bevorzugt drei Gleitpfadbereiche auf, wobei der periodisch in zumindest zwei Raumrichtungen schnell abgelenkte Lichtstrahl dann in den einzelnen Teilbereichen unterschiedliche Farbe und/oder unterschiedliche Intensität und/oder ein unterschiedliches Pulsmuster aufweist.

Um dieses zu realisieren, ist es zweckmäßig, mit einem gepulsten Lichtstrahl zu arbeiten. Besonders vorteilhaft ist es, wenn der Lichtstrahl hinsichtlich Farbe und/oder Intensität und/oder Wiederholfrequenz moduliert wird. Insbesondere bei einer solchen Ausführungsform kann mit einem oder vorzugsweise mit zwei "resonierenden" Spiegeln als Ablenkelemente für den Lichtstrahl gearbeitet werden. Ein solcher "resonierender" Spiegel" schwingt zur Ablenkung des Lichtstrahls periodisch in einer oder in mehreren Raumrichtungen, und zwar mit einer gewünschten Frequenz. Derartige Spiegel werden in vergleichbarer Form in Laserdruckem, Laserscannem oder auch Laser-Videoprojektoren eingesetzt. Es besteht die Möglichkeit, mit lediglich einem Ablenkspiegel zu arbeiten, welcher in zwei Raumrichtungen verkippt wird. Bevorzugt besteht die Möglichkeit, mit mehreren Spiegeln (z. B. zwei Spiegeln) zu arbeiten, die jeweils lediglich in einer Raumrichtung verkippt werden, z. B. schwingen. Resonierender Spiegel meint, dass dieser mit seiner Resonanzfrequenz schwingt. Dieses ist besonders energieeffizient. Es kann jedoch auch mit Spiegeln gearbeitet werden, die mit einer von der Resonanzfrequenz abweichenden Frequenz periodisch bewegt, z. B. verkippt werden.

Bei einer solchen Ausführungsform mit "schwingenden Spiegeln" wird bereits dem Lichtstrahl im Zuge der Modulation die erforderliche Information aufgeprägt. Der resonierende oder schwingende Spiegel lenkt den Lichtstrahl, z. B. Laserstrahl mit fester Wiederholfrequenz z. B. "Zeile für Zeile" oder auch in einem anderen Muster in den Abstrahlbereich. Die Modulation des Laserstrahls hinsichtlich Farbe und Intensität bzw. das Ein- und Ausschalten des Laserlichts erfolgt dann unter Berücksichtigung der Ablenkcharakteristik des Spiegels so, dass je nach Abstrahlrichtung die gewünschte Farbe und/oder die gewünschte Intensität des Lichtstrahls generiert wird.

In ähnlicher Weise wird die Videoprojektion mit Laser-Projektoren realisiert, bei denen mit einem hinsichtlich Intensität und Farbe modulierten Laserstrahl und mit Hilfe einer Scanner-Optik zeilenweise ein Bild auf eine Projektionsfläche geschrieben wird. Auch dieses erfolgt mit einer derart hohen Geschwindigkeit, dass das menschliche Auge ein vollständiges Bild wahmimmt. Auf die Entwicklung von optischen Gleitpfadanzeigen und insbesondere GPI-Systemen hatte die Technik der Laser-Projektoren keinen Einfluss. Während in der Laser-Vdeotechnologie ein Bild auf einer Projektionsfläche erzeugt wird, kann im Rahmen der vorliegenden Erfindung auf zusätzliche optische Elemente und Linsensysteme vollständig verzichtet werden. Es erfolgt insbesondere keine Abbildung auf eine Projektionsftäche, sondern der Pilot des landenden Helikopters schaut unmittelbar in den mit Hilfe des Ablenkelementes schnell abgelenkten Lichtstrahl, welcher dann je nach Anflugwinkel die entsprechende Information, z. B. Farbe oder Wiederholfrequenz, enthält. Es versteht sich, dass bei der Erzeugung des Lichtstrahls mit Hilfe z. B. eines Lasers erforderliche Sicherheitsmaßnahmen ergriffen werden, um Augenschäden des Piloten zu vermeiden. Dieses gelingt durch entsprechende Auslegung der Lichtquelle und/ oder durch den Einsatz geeigneter Filter. Dazu kann insbesondere die Intensität des Lasers angepasst werden, z. B. durch geeignete Modulation bzw. Wiederholfrequenz. Diese kann auch in Abhängigkeit von Wetterverhältnissen und Sichtverhältnissen variiert werden.

Grundsätzlich eignet sich die erfindungsgemäße Gleitpfadanzeige für einen stationären Einsatz oder auch für den Einsatz auf großen Schiffen, wie z. B. Flugzeugträgem, ohne dass eine Stabilisierung bzw. Kompensation von Stampf und Rollbewegungen des Schiffes ausgeglichen werden muss. Besonders bevorzugt werden jedoch bei der Erzeugung der optischen Gleitpfadanzeige Relativbewegungen des Schiffes in Bezug auf die Horizontale und/oder die Vertikale durch Auswertung eines auf einem Schiff ohnehin vorhandenen Referenzsensors kompensiert. Dazu schlägt die Erfindung vor, dass die Steuerung bzw. Modulation des Lichtstrahls und/oder die Steuerung des Ablenkelementes zur Kompensation von Relativbewegungen eines Schiffes, insbesondere zur Kompensation von Roll- und Stampfbewegungen, in Abhängigkeit von den Signalen eines solchen Referenzsensors erfolgt. Da bei dem erfindungsgemäßen Verfahren ohnehin ein Lichtstrahl, z B. Laserstrahl mit hoher Geschwindigkeit periodisch mit einer bestimmten Absbrahlcharakteristik bzw, in einem bestimmten Muster abgelenkt wird, kann durch geeignete Steuerung unter Berücksichtigung der Signale des Referenzsensors eine einfache und zuverlässige Kompensation von Relativbewegungen des Schiffes und insbesondere Stampf- und Rollbewegungen erfolgen, ohne dass zusätzliche (mechanische) Maßnahmen zur Stabilisierung vorgesehen werden müssen. Dabei besteht die Möglichkeit, dass das Ablenkelement bzw. die Ablenkelemente oder Ablenkspiegel, z B. resonierende Ablenkspiegel, unabhängig von den Relativbewegungen mit hoher Wiederholfrequenz abgelenkt bzw. verkippt werden und dass die Relativbewegungen bei der Erzeugung und/oder Modulation des Lichtstrahls, z. B. Laserstrahls, berücksichtigt werden, indem das Laserlicht z. B. stets zum richtigen Zeitpunkt ein- bzw. ausgeschaltet wird. Altemativ besteht aber auch die Möglichkeit, über die Modulation bzw. Steuerung der Lichtquelle lediglich das gewünschte "Muster', z B. ein dreifarbiges Muster zu erzeugen, ohne das Schiffsbewegungen in die "Bilderzeugung" einfließen. Dann kann das gesamte "Muster" in Abhängigkeit von den Schiffsbewegungen bewegt werden. Dazu kann ein weiterer Spiegel vorgesehen sein, welcher den Ablenkspiegeln, z. B. resonierenden Spiegeln, nachgeschaltet ist. Alternativ können die Ablenkspiegel, z B. resonierenden Spiegel, aber auch an einem Träger befestigt sein, welcher wiederum durch einen Verstellmechanismus in Abhängigkeit von den Schiffsbewegungen bewegt wird. Die mit einem auf dem Schiff vorgesehenen Referenzsensor erhaltenen Informationen über die Schiffsbewegungen werden bei dieser Variante folglich nicht der Lasersteuerung bzw. Lasermodulation zugeführt, sondern sie werden (z. B. über einen Rechner) an einen Verstellmechanismus für einen Träger weitergegeben, welcher die schwingenden Spiegel insgesamt verkippt, um das über die schwingenden Spiegel und die Lichtquelle erzeugte Muster In Abhängigkeit von den Schiffsbewegungen zu verschieben. Im Übrigen umfasst die Erfindung aber auch Ausführungsformen, bei denen Relativbewegungen in herkömmlicher Weise kompensiert werden.

Gegenstand der Erfindung ist auch eine Vorrichtung zur optischen Gleitpfadanzeige als Landehilfe für ein Luftfahrzeug mit einem Verfahren der beschriebenen Art. Eine solche Vorrichtung wird besonders bevorzugt auf einem Schiff installiert. Sie weist zumindest eine Lichtquelle zur Erzeugung eines kollimierten Lichtstrahls und zumindest ein Ablenkelement auf, wobei das Ablenkelement den kollimierten Lichtstrahl unter Erzeugung eines den Gleitpfad repräsentierenden Abstrahlbereiches periodisch In zumindest zwei Raumrichtungen ablenkt. Die Lichtquelle kann als Laser ausgebildet sein oder zumindest einen Laser aufweisen. Grundsätzlich sind jedoch auch Lichtquellen anderer Ausgestaltung denkbar, welche einen kollimierten, laserähnlichen Lichtstrahl erzeugen, z. B. geeignete Leuchtdioden, gegebenenfalls unter Einsatz einer geeigneten Optik.

Sofern auf eine Farbkodierung der Gleitpfadanzeige verzichtet wird, kann mit lediglich einem einzigen (monochromen) Laser gearbeitet werden. Sofern einzelne Gleitwinkeibereiche durch unterschiedliche Farben, z. B. grün, rot und gelb, repräsentiert werden, besteht die Möglichkeit, mit einem RGB-Laser zu arbeiten, welcher wahlweise Strahlen unterschiedlicher Wellenlänge und folglich unterschiedlicher Farbe erzeugen kann. Besonders bevorzugt weist die Lichtquelle jedoch mehrere Laser, z. B. zwei Laser oder drei Laser auf, welche dann vorzugsweise mit einem optischen Element zur Strahlzusammenführung zusammengeführt werden. Es besteht die Möglichkeit, drei Laser, z B. einen grünen Laser, einen roten Laser und einen gelben Laser zu verwenden. Es ist jedoch vielfach ausreichend, lediglich mit einem grünen Laser und einem roten Laser zu arbeiten, da sich das für den Gleitpfad gegebenenfalls erforderliche gelbe Licht auch durch Überlagerung und folglich additive Mischung von rotem und grünem Licht erzeugen lässt.

Das Ablenkelement ist vorzugsweise als Ablenkspiegel ausgebildet. Wie bereits beschrieben kann grundsätzlich ein einziger Ablenkspiegel ausreichen. Es ist jedoch zweckmäßig, mit mehreren Ablenkspiegeln zu arbeiten, welche für die Ablenkung in unterschiedlichen Raumrichtungen eingesetzt werden. Besonders zweckmäßig ist der Einsatz eines oder mehrerer (z. B. zwei) resonierender bzw. schwingender Spiegel, wie sie beispielsweise auch in Laserscannem oder Laser-Vdeoprojektoren eingesetzt werden.

Nach einem weiteren Vorschlag weist die Lichtquelle eine Steuereinrichtung auf oder sie ist mit einer solchen Steuereinrichtung verbunden. Diese Steuereinrichtung kann insbesondere die Modulation des Lichtstrahls bzw. Ein- und Ausschalten des Laserlichts realisieren. Es besteht jedoch auch die Möglichkeit, der eigentlichen Lasenquelle einen Modulator, z B. einen elektrooptischen oder akustoopischen Modulator nachzuschalten, wobei die Steueeinrichtung dann ebenfalls mit diesem Modulator verbunden ist. Jedenfalls erzeugt die Steuereinrichtung der Lichtquelle durch geeignete Modulation (und folglich gezieltes Ein-und Ausschalten) der einzelnen Laserstrahlen das gewünschte farbige "Muster", welches die einzelnen Gleitpfadbereiche repräsentiert. Dazu ist die Steuereinrichtung in der Regel mit den Ablenkelementen, z. B. schwingenden oder resonierenden Spiegeln, verbunden, insbesondere zum Zwecke der Synchronisation. Ergänzend kann es zweckmäßig sein, wenn an die Steuereinrichtung der Lichtquelle ein programmierbarer Rechner oder eine programmierbare Steuerung angeschlossen ist. Durch geeignete Programmierung lässt sich mit diesem Rechner das gewünschte Muster, z B. das "dreifarbige Streifenmuster" vorgeben, welches dann von der Steuereinrichtung der Lichtquelle realisiert wird. Ein solcher programmierbarer Rechner ist z. B. dann zweckmäßig, wenn die Steuereinrichtung des Lasers selbst nicht programmierbar ist. Grundsätzlich besteht aber auch die Möglichkeit. Rechner bzw. Steuerung einerseits und Steuereinrichtung der Lichtquelle andererseits zu kombinieren.

Sofern ein stabilisiertes GPI-System realisiert wird, ist es zweckmäßig, den Referenzsensor des Schiffes mit dem Rechner und/oder mit der Steuereinrichtung des Lasers zu koppeln.

Als Laser werden vorzugsweise Halbleiterlaser bzw. Laserdioden eingesetzt, da diese sich durch ihre besonders kompakte Bauform auszeichnen. Grundsätzlich können aber auch andere Lasersysteme zum Einsatz kommen, z. B. Festkörperiaser oder Gaslaser.

Im Folgenden wird die Erfindung anhand einer lediglich ein Ausführungsbeispiel darstellenden Zeichnung näher erläutert. Es zeigen:
- **Fig. 1**: stark vereinfacht die Funktionsweise einer auf einem Schiff installierten optischen Gleitpfadanzeige,
- **Fig. 2**: den schematischen Aufbau der Vorrichtung nach Fig. 1 und
- **Fig. 3**: das in der Ebene E gemäß Fig. 2 auf einem imaginären Schirm erzeugte Bild.

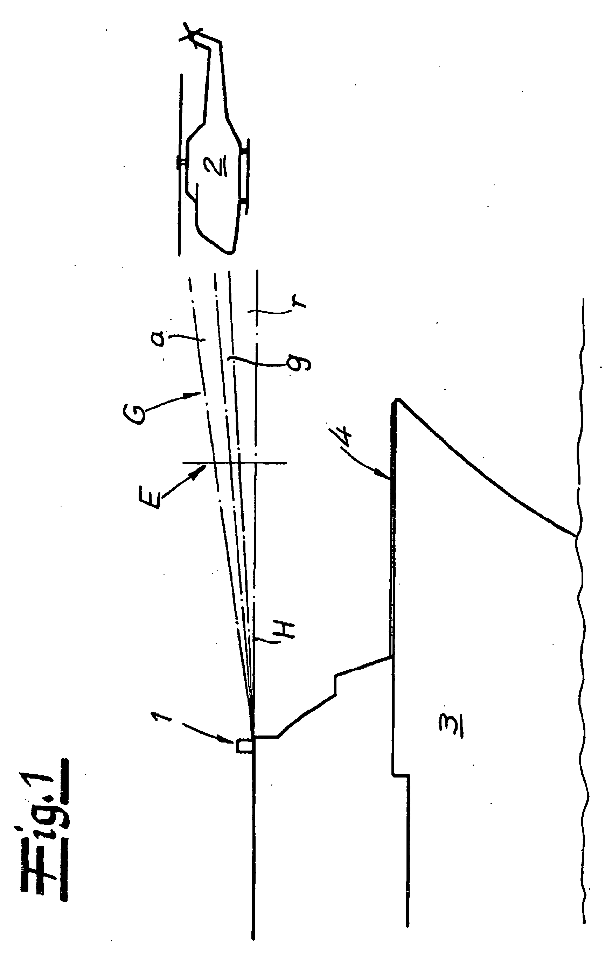

Die erfindungsgemäße Vorrichtung 1 zur optischen Gleitpfadanzeige dient als Landehilfe für ein Luftfahrzeug und insbesondere einen in Fig. 1 angedeuteten Helikopter 2. Diese Vorrichtung, die auch als GPI-System (glide path indicator) bezeichnet wird, wird auf einem Schiff 3 im Bereich eines Helikopter-Landeplatzes 4 installiert. Das GPI-System ist mit seiner Lichtquelle in der Regel in einem vorgegebenen Abstand oberhalb des Landeplatzes installiert

Ein solches GPI-System 1 zeigt den Gleitpfad G auf optischem Wege dadurch an, dass Lichtstrahlen bzw. Strahlenbündel unter vorgegebenem Winkel bezogen auf die Horizontale H in den Anflugbereich des Helikopters 2 abgestrahlt werden. Die einzelnen Gleüpfadbereiche, z. B. Gleitwinkelbereiche werden dabei durch Licht unterschiedlicher Farbe angezeigt. Der optimale (zentrale) Gleitpfad wird durch grünes Licht g angezeigt, welches der Pilot wahrnimmt, wenn er sich dem Schiff mit dem optimalen Gleitwinkel von z. B. α = 4° (+/- Δα) nähert. Fliegt der Pilot unterhalb dieses empfohlenen Gleitwinkeibereichs, so sieht er rotes Licht r, fliegt, er oberhalb des empfohlenen Gleitwinkelbereichs, so sieht er gelbes Licht a. Darüber hinaus besteht die Möglichkeit, einzelne Bereiche durch entsprechende Wiederholfrequenzen, z. B. mit einer bestimmten Frequenz gepulstes Licht, weiter zu spezifizieren. Dieses wird in der Praxis insbesondere für den unteren roten Bereich realisiert, wobei das "untere Ende" des roten Winkelbereiches durch gepulstes Licht signalisiert wird.

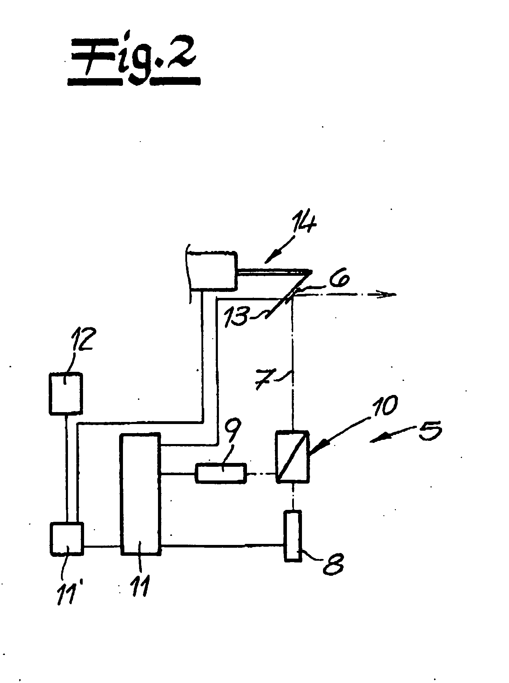

Im Rahmen der Erfindung erzeugt die Lichtquelle 5 einen kollimierten Lichtstrahl 7. Dieser kollimierte Lichtstrahl 7 wird nun nicht aufgeweitet und als Bündel abgestrahlt, sondern mit Hilfe zumindest eines Ablenkelementes, vorzugsweise Ablenkspiegels 6, unter Erzeugung des den Gleitpfad repräsentierenden Abstrahlbereiches periodisch in zwei Raumrichtungen X, Y abgelenkt. Der Abstrahlbereich weist dabei drei unterschiedliche Gleitpfadbereiche, bzw. Gleitwinkelbereiche auf, wobei der kollimierte Lichtstrahl 7, welcher über das Ablenkelement 6 in den Abstrahlbereich abgelenkt wird, in den einzelnen Teilbereichen unterschiedliche Farben und/oder unterschiedliche Intensität aufweist. Der Lichtstrahl ist als Laserstrahl 7 ausgebildet und zwar als gepulster Laserstrahl 7. Im Einzelnen weist die Lichtquelle 5 zumindest zwei Laser, nämlich einen ersten Laser 8 und einen zweiten Laser 9 auf, wobei der erste Laser vorzugsweise grünes Licht und der zweite Laser vorzugsweise rotes Licht erzeugt. Das rote Licht des Lasers 8 und das grüne Licht des Lasers 9 werden in einer optischen Einrichtung 10 zur Strahlzusammenführung zusammengeführt. Mit Hilfe der in Fig. 2 lediglich angedeuteten Steuereinrichtung 11 der Lichtquelle 5 wird der gepulste und kollimierte Lichtstrahl 7 nun hinsichtlich seiner Farbe und/oder seiner Intensität moduliert. Dieses gelingt insbesondere durch zeitlich gezieltes "Ein- und Ausschalten" der von dem roten und grünen Laser 8 bzw. 9 erzeugten Strahlen, so dass ein gewünschtes Pulsmuster aus rotem, grünem oder - sofern beide Laser aktiv sind - gelbem Lasedicht aus der Strahlzusammenführung 10 austritt Optional können auch drei Laser verwendet werden, z. B. ein grüner Laser, ein roter Laser und ein gelber Laser. Dann kann auf eine "Mischung von grünem und rotem Licht verzichtet werden. Diese Option ist nicht dargestellt. Im Übrigen ist erkennbar, dass ein programmierbarer Rechner 11' vorgesehen ist, welcher mit der Steuereinrichtung 11 der Lichtquelle verbunden ist. Durch geeignete Programmierung des Rechner 11' können die gewünschten Muster erzeugt werden, die dann von der Steuereinrichtung 11 umgesetzt werden.

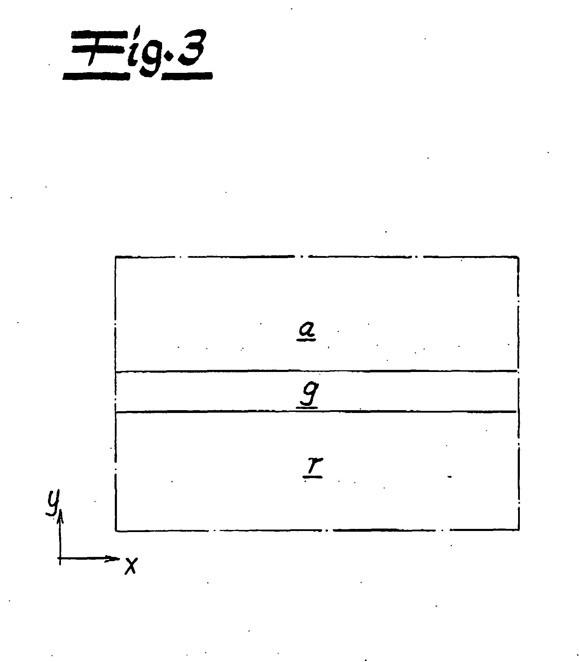

Um die Ablenkung des Lichtstrahls 7 in den beiden Raumrichtungen X und Y zu realisieren, sind im Ausführungsbeispiel zwei Spiegel 6 vorgesehen, von denen jedoch lediglich einer angedeutet ist. Diese Spiegel 6 sind im Ausführungsbeispiel als periodisch schwingende und vorzugsweise in Resonanz schwingende resonierende Ablenkspiegel 6 ausgestaltet, welche den gepulsten Lichtstrahl 7 periodisch in die Raumrichtungen X und Y ablenken. Die Spiegel 6 werden dabei periodisch mit hoher Geschwindigkeit verkippt, so dass der auf die Spiegel 6 auftreffende gepulste und modulierte Lichtstrahl 7 gleichsam zeilenweise oder auch In einem anderen Ablenkmuster in den Abstrahlbereich abgelenkt wird und auf diese Weise den den Gleitpfad repräsentierenden Abstrahlbereich erzeugt. Die Spiegel 6 sind mit der Steuereinrichtung 11 der Lichtquelle zum Zwecke der Synchronisation verbunden. Folglich wird stets lediglich ein kollimierter Lichtstrahl und insbesondere Laserstrahl in den Anflugbereich abgelenkt, jedoch in ständig wechselnden Raumrichtungen, und zwar mit einer sehr hohen Wiederholfrequenz so dass - sofern man eine Projektionsfläche, z. B. einen Schirm in der Ebene E in den Abstrahlbereich stellen würde -, dort das in Fig. 3 dargestellte Bild abgebildet würde. Dieses gelingt durch geeignete Modulation des kollimierten und gepulsten Lichtstrahl 7 unter Berücksichtigung der Ablenkcharakteristik der (resonierenden) Spiegel 6. Es wird jedoch darauf hingewiesen, dass tatsächlich das in Fig. 3 dargestellte Bild im Rahmen der Erfindung nicht erzeugt wird, denn auf eine echte Abbildung bzw. Projektion wird im Rahmen der Erfindung verzichtet. Vielmehr schaut der Pilot des landenden Helikopters 2 unmittelbar in den Bereich des GPI-Systems und dort gleichsam unmittelbar in den austretenden Lichtstrahl, der jedoch aufgrund der hohen Ablenkgeschwindigkeit und der Trägheit des menschlichen Auges, z. B. im Falle des optimalen Gleitwinkeis, als konstantes grünes Licht erscheint.

Von besonderer Bedeutung ist im Rahmen des dargestellten Ausführungs-beispieis ferner die Tatsache, dass bei der Erzeugung des Gleitpfades Relativbewegungen des Schiffes 3 bezogen auf die Horizontale und insbesondere Stampfbewegungen und Rollbewegungen kompensiert und folglich ausgeglichen werden können. Dieses kann grundsätzlich ebenfalls durch geeignete Modulation des Lichtstrahls 7 erfolgen. Dazu erfolgt die Modulation des Lichtstrahls 7 unter Berücksichtigung des Signals eines Referenzsensors 12, welcher als Vertikalreferenz bzw. Horizontalreferenz auf dem Schiff installiert ist. Der in der Praxis ohnehin auf dem Schiff installierte Referenzsensor 12 registriert folglich Rollbewegungen und Stampfbewegungen des Schiffes. Um zu gewährleisten, dass der angezeigte Gleitpfad nicht durch derartige Stampfbewegungen und/oder Rollbewegungen beeinflusst wird, kann nun nach einer möglichen Ausführungsform der Erfindung eine Kompensation auf elektronischem Wege ausschließlich durch geeignete Modulation des Lichtstrahls 7 erreicht werden. Der Referenzsensor 12 ist dazu mit dem Rechner 11' und/oder mit der Steuereinrichtung 11 der Lichtquelle 5 verbunden. Bei der Erzeugung des den Gleitpfad representierenden Musters kann der Rechner folglich die Schiffsbewegungen berücksichtigen und in den "Bildaufbau" einfließen lassen, und zwar durch geeignete Modulation der Lichtquelle.

Optional besteht die Möglichkeit, über die Modulation der Laser lediglich das in Fig. 3 dargestellte "Muster" zu erzeugen, und zwar unabhängig von den Schiffsbewegungen. Dann können die Schiffsbewegungen durch geeignetes Verkippen des Ablenksystems, das heißt der Ablenkelemente 6, insgesamt kompensiert werden, z. B. durch Verkippen eines Trägers 13, an dem die Ablenkspiegel 6 und folglich das Ablenksystem montiert sind. Diese Möglichkeit ist in Fig. 2 angedeutet, denn während die Lasersteuerung 11 mit den resonierenden Ablenkspiegeln 6 verbunden ist, ist der Rechner 11', welcher mit dem Referenzsensor 12 verbunden ist, ebenfalls mit einem elektromechanischen Verstell-mechanismus 14 für den Träger 13 verbunden. Die von dem Referenzsensor 12 ermittelten und an den Rechner 11' übertragenen Schiffsbewegungen werden dann folglich nicht in der Lasersteuerung 11, sondern bei der Steuerung des Trägers 13 berücksichtigt.

Folglich ist in Fig. 2 angedeutet, dass der Ablenkspiegel 6, an einem Trägersystem 13 befestigt ist, welches mit einem elektronmechanischen Verstellmechanismus 14 versehen ist. Sofern über den Träger 13 die Kompensation der Schiffsbewegungen realisiert wird, ist es zweckmäßig, wenn dieser Verstellmechanismus 14 mit dem Rechner 11' verbunden ist. Sofern die Kompensation von Schiffsbewegungen - wie oben beschrieben - unmittelbar bei der "Bilderzeugung" mit Hilfe des Rechners 11' realisiert wird, kann grundsätzlich auf eine Kopplung zwischen dem Rechner 11' und dem Verstellmechanismus 14 verzichtet werden. Eine solche Kopplung kann jedoch auch dann zweckmäßig sein, z. B. zum Zwecke der Justage der Vorrichtung.

## Patentansprüche

1. Verfahren zur optischen Gleitpfadanzeige, als Landehilfe für ein Luftfahrzeug auf einem Schiff,
wobei mit zumindest einer Lichtquelle ein kollimierter Laserstrahl erzeugt wird, der hinsichtlich Farbe und/oder Intensität moduliert wird,
wobei der Laserstrahl mit zumindest einem Ablenkelement unter Erzeugung eines den Gleitpfad anzeigenden Abstrahlbereiches periodisch in zumindest zwei Raumrichtungen abgelenkt wird,
wobei der Abstrahlbereich zumindest zwei unterschiedliche Gleitpfadbereiche anzeigenden Teilbereiche aufweist, wobei der Laserstrahl in den einzelnen Teilbereichen unterschiedliche Farbe und/oder Intensität aufweist,
wobei ein oder mehrere Ablenkelemente zur Ablenkung des modulierten Laserstrahls periodisch in einer oder in mehreren Raumrichtungen mit einer oder mehreren Frequenzen periodisch verschwenkt oder verkippt wird/werden und
wobei die Modulation des Laserstrahls zur Kompensation von Relativbewegungen eines Schiffes, insbesondere Rollbewegungen und/oder Stampfbewegungen, in Abhängigkeit von Signalen eines auf dem Schiff installierten Referenzsensors erfolgt.

2. Verfahren nach Anspruch 1, wobei ein gepulster Laserstrahl verwendet wird.

3. Verfahren nach Anspruch 1 oder 2, wobei als Ablenkelemente ein oder mehrere Spiegel verwendet wird/werden.

4. Vorrichtung (1) zur optischen Gleitpfadanzeige als Landehilfe für ein Luftfahrzeug (2) mit einem Verfahren nach einem der Ansprüche 1 bis 3, zur Installation auf einem Schiff (3),
mit zumindest einer Laser-Lichtquelle (5) zur Erzeugung eines kollimierten Laserstrahls (7), der mit einer Modulationseinrichtung hinsichtlich Farbe und/oder Intensität moduliert ist,
mit zumindest einem periodisch in zumindest zwei Raumrichtungen bewegten Ablenkelement (6), welches den kollimierten Laserstrahl (5) unter Erzeugung eines den Gleitpfad anzeigenden Abstrahlbereiches periodisch in zumindest zwei Raumrichtungen ablenkt,
wobei die Laser-Lichtquelle (5) eine Steuereinrichtung (11) aufweist oder mit einer solchen Steuereinrichtung (11) verbunden ist,
wobei ein programmierbarer Rechner (11') mit der Lichtquelle (5) oder mit deren Steuereinrichtung (11) verbunden ist und
wobei die Steuereinrichtung (11) der Laser-Lichtquelle (5) und/oder der programmierbare Rechner (11') mit einem Referenzsensor (12) verbunden oder verbindbar ist, welcher Relativbewegungen des Schiffes (3) gegenüber der Horizontalen (H), insbesondere Roll- und Stampfbewegungen des Schiffes ermittelt.

5. Vorrichtung nach Anspruch 4, wobei die Laser-Lichtquelle (5) mehrere Laser (8, 9) unterschiedlicher Wellenlänge aufweist.

6. Vorrichtung nach Ansprüche 4 oder 5, wobei die Lichtquelle (5) zumindest eine optische Einrichtung (10) zur Strahlzusammenführung aufweist.

7. Vorrichtung nach einem der Ansprüche 4 bis 6, wobei das Ablenkelement (6) als beweglich gelagerter, periodisch bewegter Spiegel ausgebildet ist.

8. Vorrichtung nach Anspruch 7, wobei zur Ablenkung des Laserstrahls in zwei Raumrichtungen zumindest zwei Ablenkspiegel (6) vorgesehen sind.

9. Vorrichtung nach einem der Ansprüche 4 bis 8, wobei das Ablenkelement (6) mit der Steuereinrichtung (11) verbunden ist.

10. Vorrichtung nach einem der Ansprüche 4 bis 9, wobei das Ablenkelement (6) auf einen beweglichen Träger (13) angeordnet ist, welcher mit einem Stellmechanismus (14) versehen ist, wobei der Stellmechanismus (14) vorzugsweise mit der programmierbaren Steuerung oder dem programmierbaren Rechner (11') verbunden ist.

## Claims

1. A method for an optical glide path indication, as a landing aid for an aircraft on a ship,
wherein a collimated laser beam is generated with at least one light source, which beam is modulated with respect to colour and/or intensity,
wherein the laser beam is deflected periodically in at least two spatial directions with at least one deflecting element with the generation of a region of radiation indicating the glide path,
wherein the region of radiation has at least two sub-regions indicating different glide path regions, wherein the laser beam has a different colour and/or intensity in the individual sub-regions,
wherein one or a plurality of deflecting elements for purposes of deflecting the modulated laser beam periodically in one or a plurality of spatial directions with one or a plurality of frequencies is/are periodically swivelled or tilted, and
wherein the modulation of the laser beam, for purposes of compensation of relative movements of a ship, in particular rolling movements and/or pitching movements, takes place as a function of signals from a reference sensor installed on the ship.

2. The method in accordance with Claim 1, wherein a pulsed laser beam is used.

3. The method according to Claim 1 or 2, wherein one or a plurality of mirrors is/are used as deflecting elements.

4. A device (1) for purposes of an optical glide path indication as a landing aid for an aircraft (2) with a method in accordance with one of the Claims 1 to 3, for purposes of installation on a ship (3),
with at least one laser light source (5) for purposes of generating a collimated laser beam (7), which is modulated with a modulation device with respect to colour and/or intensity,
with at least one deflecting element (6) moved periodically in at least two spatial directions, which element deflects the collimated laser beam (5) periodically in at least two spatial directions with the generation of a region of radiation indicating the glide path, wherein
the laser light source (5) has a control device (11), or is connected with such a control device (11), wherein
a programmable computer (11') is connected with the light source (5) or with its control device (11), and wherein
the control device (11) of the laser light source (5) and/or of the programmable computer (11') is connected, or can be connected, with a reference sensor (12), which determines movements of the ship (3), in particular rolling and pitching movements of the ship, relative to the horizontal (H).

5. The device in accordance with Claim 4, wherein the laser light source (5) has a plurality of lasers (8, 9) of different wavelengths.

6. The device in accordance with Claims 4 or 5, wherein the light source (5) has at least one optical device (10) for purposes of beam combination.

7. The device in accordance with one of the Claims 4 to 6, wherein the deflecting element (6) is designed as a moveably mounted, periodically moved mirror.

8. The device in accordance with Claim 7, wherein at least two deflecting mirrors (6) are provided for purposes of deflecting the laser beam in two spatial directions.

9. The device in accordance with one of the Claims 4 to 8, wherein the deflecting element (6) is connected with the control device (11).

10. The device in accordance with one of the Claims 4 to 9, wherein the deflecting element (6) is arranged on a moveable support (13), which is provided with an adjustment mechanism (14), wherein the adjustment mechanism (14) is preferably connected with the programmable controller or the programmable computer (11').

## Revendications

1. Procédé d'indication optique d'alignement de descente en tant qu'aide à l'atterrissage pour un aéronef sur un bateau,
dans lequel un faisceau laser collimaté est produit avec au moins une source lumineuse, lequel est modulé en ce qui concerne la couleur et/ou l'intensité,
dans lequel le faisceau laser est diffracté périodiquement dans au moins deux directions spatiales avec au moins un élément de diffraction par la production d'une zone de rayonnement indiquant l'alignement de descente,
dans lequel la zone de rayonnement présente au moins deux zones partielles indiquant des zones d'alignement de descente différentes, sachant que le faisceau laser présente une couleur et/ou une intensité différente(s) dans les différentes zones partielles,
dans lequel un ou plusieurs éléments de diffraction pour diffracter le faisceau laser modulé périodiquement dans une ou plusieurs directions spatiales est/sont périodiquement pivoté(s) ou basculé(s) avec une ou plusieurs fréquences et
dans lequel la modulation du faisceau laser pour compenser les mouvements relatifs d'un bateau, en particulier les mouvements de roulis et/ou de tangage, a lieu en fonction de signaux d'un capteur de référence installé sur le bateau.

2. Procédé selon la revendication 1, **caractérisé en ce qu'**un faisceau laser pulsé est employé.

3. Procédé selon la revendication 1 ou 2, **caractérisé en ce qu'**un ou plusieurs miroir(s) est/sont employé(s) comme éléments de diffraction.

4. Dispositif (1) d'indication optique d'alignement de descente en tant qu'aide à l'atterrissage pour un aéronef (2) comprenant un procédé selon l'une des revendications 1 à 3, destiné à être installé sur un bateau (3),
comprenant au moins une source lumineuse laser (5) pour produire un faisceau laser (7) collimaté qui est modulé avec un appareil de modulation en ce qui concerne la couleur et/ou l'intensité,
comprenant au moins un élément de diffraction (6) déplacé périodiquement dans au moins deux directions spatiales, lequel diffracte le faisceau laser (5) collimaté périodiquement dans au moins deux directions spatiales par la production d'une zone de rayonnement indiquant l'alignement de descente,
dans lequel la source lumineuse laser (5) comprend un dispositif de commande (11) ou est reliée à un tel dispositif de commande (11),
dans lequel un ordinateur programmable (11') est relié à la source lumineuse (5) ou à son dispositif de commande (11) et
dans lequel le dispositif de commande (11) de la source lumineuse laser (5) et/ou l'ordinateur programmable (11') est relié ou peut être relié à un capteur de référence (12), lequel calcule des mouvements relatifs du bateau (3) par rapport à l'horizontale (H), en particulier des mouvements de roulis et de tangage du bateau.

5. Dispositif selon la revendication 4, dans lequel la source lumineuse laser (5) présente plusieurs lasers (8, 9) de longueurs d'ondes différentes.

6. Dispositif selon la revendication 4 ou 5, dans lequel la source lumineuse (5) présente au moins un dispositif optique (10) pour concentrer le faisceau.

7. Dispositif selon l'une des revendications 4 à 6, dans lequel l'élément de diffraction (6) est formé comme un miroir positionné de manière mobile, déplacé périodiquement.

8. Dispositif selon la revendication 7, dans lequel au moins deux miroirs de diffraction (6) sont prévus pour diffracter le faisceau laser dans deux directions spatiales.

9. Dispositif selon l'une des revendications 4 à 8, dans lequel l'élément de diffraction (6) est relié au dispositif de commande (11).

10. Dispositif selon l'une des revendications 4 à 9, dans lequel l'élément de diffraction (6) est disposé sur un support mobile (13) qui est muni d'un mécanisme de réglage (14), dans lequel le mécanisme de réglage (14) est relié de préférence à la commande programmable ou à l'ordinateur programmable (11').
